# DEMANDE DE BREVET EUROPEEN

(11) **EP 4 560 182 A1**
(43) Date de publication de la demande: **28.05.2025**
(21) Numéro de dépôt: 24157980.4
(22) Date de dépôt: 15.02.2024
(51) Int. Cl.: F21L 4/04, H01M 50/247, H01M 50/262, H01M 10/46, F21L 4/08, F21V 17/18, F21V 21/084, F21V 15/01

(54) **DISPOSITIF DE CONNEXION ÉLECTRIQUE UNIVERSEL POUR UN BOÎTIER DE BATTERIE ET/OU À UNE BATTERIE**

(30) Priorité: 21.11.2023 EP 23315436
(71) Demandeur: Zedel, 38920 Crolles (FR)
(72) Inventeur: BORTOLOTTI, Raphaël, 74940 Annecy le Vieux (FR); ORCHAMPT AQUILINA, Pascal, 38190 La Combe de Lancey (FR); CARRIER, Jérôme, 74000 Annecy (FR)
(74) Mandataire: Schuffenecker, Thierry

(57) **Abrégé**

**1.** Un dispositif de recharge d'une batterie comportant :
un connecteur (60) doté de trois contact électriques disposés linéairement et de deux mâchoires comportant à leurs extrémité une surface cylindrique destinée à venir se clipser sur une batterie/boitier ; dans lequel ledit connecteur comporte trois contacts (61, 62, 63) électriques linéairement disposés avec le contact du milieu localisé à égale distance des deux mâchoires ; et
une batterie/boîtier comportant deux faces latérales gauche et droite comprenant chacune un évidement avec un profil d'accrochage (55, 56) configuré par chaque mâchoire correspondante dudit connecteur (60), ladite batterie comportant trois bornes d'électrodes disposées linéairement et configurées pour permettre une connexion électrique avec chacun des trois contacts (61, 62, 63) dudit connecteur (60) , dans lequel l'électrode du milieu (52) véhicule un potentiel représentatif de la température de la batterie ; et
dans lequel le profil de chacun desdits évidements comprend deux surfaces sensiblement planes (55a- 55c, 56a-56c) formant sensiblement un angle rentrant, et qui sont raccordées au moyen d'une rainure semi-circulaire 45b fournissant une ligne d'appui à la surface cylindrique d'une mâchoire correspondante de manière à permettre un clipsage du connecteur.

## Description

### Domaine technique de l'invention

La présente invention concerne le domaine des lampes électriques portatives et notamment un dispositif de connexion électrique universel pour un système de recharge d'une batterie d'une lampe frontale.

### Etat de la technique

Les lampes portatives de type frontale comportent souvent un logement de batterie, interne ou externe selon que l'on souhaite déporter à l'arrière le poids de cette batterie.

Le poids des batteries s'accroissant et les conditions d'utilisation devenant plus rudes, il est important de pouvoir disposer d'un boîtier de batterie permettant un logement parfaitement sécurisé et étanche pour la batterie.

Il est par ailleurs souhaitable de pouvoir disposer d'un système de recharge performant, notamment dans la rapidité et dans la facilité de la recharge pour l'utilisateur et ce dans toute configuration envisageable.

Tel est le problème technique à résoudre par la présente invention.

### Exposé de l'invention

C'est un but de la présente invention de proposer un dispositif de connexion électrique pour un boîtier de logement de batterie d'une lampe frontale offrant diverses possibilités et configurations de recharge.

C'est un autre but de la présente invention de réaliser un dispositif de connexion électrique universel permettant plusieurs configurations de recharge, dont une recharge directe d'une batterie, à l'extérieur de la lampe frontale, ou encore une recharge de cette même batterie une fois logée dans son boîtier de logement de la lampe frontale.

C'est un troisième but de la présente invention de réaliser un chargeur de batterie comportant un dispositif de connexion électrique qui permette une connexion et une recharge quel que soit le sens de raccordement du connecteur de recharge.

C'est un quatrième but de la présente invention de proposer un dispositif de connexion électrique permettant une recharge rapide d'une batterie même lorsque logée à l'intérieur d'un boîtier d'une lampe frontale.

La présente invention permet d'atteindre tous ces buts en réalisant un dispositif de connexion électrique pour une batterie ou un boîtier de batterie comportant :
un connecteur doté de trois contacts électriques disposés linéairement ainsi que deux mâchoires dont l'extrémité présente une surface cylindrique et permettant un clipsage sur une batterie ou un boîtier de logement d'une batterie ; le contact du milieu étant disposé à égale distance des deux mâchoires; et
Une batterie/boitier comportant deux faces latérales gauche et droite comprenant chacune un évidement avec un profil d'accrochage correspondant à l'une des mâchoires du connecteur.

Chacun des profils d'accrochage des évidements est caractérisé par la présence de deux surfaces sensiblement planes formant sensiblement un angle rentrant, et qui sont raccordées au moyen d'une rainure cylindrique dont l'axe générateur est parallèle à l'arête supérieure des faces latérales gauche et droite. La rainure fournit en même temps une ligne d'appui à la surface cylindrique de la mâchoire de manière à permettre un verrouillage du clipsage du connecteur.

La batterie ou le boîtier comporte également une première, une seconde et une troisième bornes d'électrodes disposées linéairement et à égale distance et configurées pour permettre une connexion électrique avec chacun des trois contacts du connecteur.

Les première et troisième bornes électriques sont dédiés à la transmission d'un potentiel électrique positif tandis que la seconde borne électrique est située à égale distance des profils d'accrochage gauche et droite de manière à permettre une connexion du connecteur par la droite ou par la gauche.

Dans un mode de réalisation alternatif, l'une parmi les première ou seconde borne est configurée pour transmettre au chargeur un potentiel représentatif de la température de la batterie et les deux autres bornes sont alors configurées pour transmettre deux potentiels positif et négatif. Le système de recharge est configuré avec des circuits électroniques de détection et de commutation pour permettre à l'utilisateur de connecter le connecteur indifféremment vers la droite ou vers la gauche. Cette disposition s'avère très avantageuse dans la mesure où elle permet de délocaliser à l'extérieur du boîtier le circuit électronique de gestion de la batterie et d'éviter ainsi de devoir évacuer une chaleur intense générée à l'intérieur d'un boîtier étanche, ce qui pourrait ralentir le processus de recharge

### Description des dessins

D'autres caractéristiques, but et avantages de l'invention apparaîtront à la lecture de la description et des dessins ci-après, donnés uniquement à titre d'exemples non limitatifs. Sur les dessins annexés :
Les figures 1a et 1b présentent deux vues en perspective avant/arrière d'un corps de boîtier destiné au logement d'une batterie électrique suivant un mode de réalisation.
Les figures 2a et 2b illustrent deux vues en perspective, avant et arrière, d'un couvercle de boîtier conforme à la présente invention, comportant un connecteur électrique tripolaire 40.
Les figures 3a et 3b illustrent deux vues en perspective, avant et arrière, d'un levier de verrouillage pour le couvercle de boîtier.
La figure 4a est une vue montrant une lampe frontale comportant un boîtier, son couvercle et le levier de verrouillage monté sur un support.
La figure 4b est une coupe de la lampe frontale suivant l'axe CAME-CAME de la figure 4a.
La figure 5a est une coupe suivant l'axe LEVIER-LEVIER de la figure 4a.
La figure 5b est une coupe suivant l'axe AXE_LEVIER-AXE_LEVIER de la figure 5a.
Les figures 6a, 6b et 6c montrent trois coupes illustratives du verrouillage du capot au moyen du levier de verrouillage, illustrant l'engagement de la clavette semi-circulaire dans la rainure circulaire correspondante.
Les figures 7a, 7b et 7c illustrent trois phases de l'ouverture du couvercle de boitier comportant par ailleurs un connecteur électrique tripolaire selon l'invention.
La figure 8a illustre une perspective avant du boîtier de batterie dans lequel est insérée une batterie 200.
La figure 8b illustre une perspective avant d'une batterie 200 conforme à la présente invention.
Les figures 9a, 9b et 9c illustrent trois vues en perspective d'un connecteur conforme à la présente invention adapté pour permettre un raccordement au boîtier 10 ou directement à la batterie 200.
Les figures 10a, 10b et 10c illustrent trois phases successives d'un raccordement électrique du connecteur électrique 60 sur le boîtier 10 par « la gauche ».
Les figure 11a, 11b et 11c illustrent trois phases successives d'un raccordement électrique du connecteur électrique 60 sur le boîtier 10 «par la droite ».
Les figures 12a, 12b et 12c illustrent trois phases successives d'un raccordement électrique du connecteur électrique 60 à la batterie 200 « par la gauche».
Les figure 13a, 13b et 13c illustrent trois phases successives d'un raccordement électrique du connecteur électrique 60 « par la droite».
Les Figures 14a, 14b et 14c illustrent une coupe du boîtier avec la batterie, ainsi que deux vues en détails A et B , respectivement.
La figure 15a illustre la vue CONNEC-CONNEC du boîtier comportant la batterie, ainsi que la définition d'une coupe Y_0.
La figure 15b illustre la coupe Y_0-Y_0 définie dans la figure 15a.
La figure 15c illustre un détail C de la figure 15b.
Les figures 16a, 16b et 16c illustrent respectivement une coupe du connecteur de raccordement raccordé sur le boîtier comportant la batterie, ainsi que deux détails D et E respectivement.
Les figures 17a, 17b, 17c et 17d illustrent respectivement les mêmes coupes que celles des figures 15, mais avec le connecteur raccordé sur le boîtier de logement de la batterie, avec deux vues en détail D et E.
La figure 18 illustre un premier mode de réalisation de l'électronique du système de recharge associé à la batterie 200.
La figure 19 illustre un premier mode de réalisation de l'électronique du système de recharge associé à la batterie 200.
La figure 20 illustre un premier mode de réalisation de l'électronique du système de recharge associé à la batterie 200.

### Description des modes de réalisation

On va décrire de manière générale un boîtier destiné à servir de logement pour une batterie ainsi qu'un dispositif de raccordement électrique d'un connecteur destiné à la recharge de cette même batterie suivant des configurations diverses.

Dans le but de réduire le poids de la charge portée à l'avant de la tête de l'utilisateur, le boîtier de batterie est conçu pour être déporté à l'arrière de la tête de celui-ci afin d'alimenter un circuit électronique de lampe frontale situé à l'avant de ce dernier. Il est à noter cependant qu'il ne s'agit que d'un mode de réalisation particulier et que le dispositif de connexion de la présente invention ne saurait se limiter aux seules lampes frontales ayant un boîtier de batterie externe. Clairement, le système de verrouillage novateur qui va être décrit en détail peut être mis en oeuvre au sein même d'une lampe frontale monobloc comportant à la fois le système d'éclairage ainsi qu'un compartiment interne de batterie.

Plus généralement même, le boîtier et son système de verrouillage est conçu de manière totalement indépendante du système d'éclairage à LED et de son électronique associée. Par conséquent, le boîtier qui va être décrit pourra être associé à tout système d'éclairage quelconque, du plus simple au plus sophistiqué comme, par exemple, celui d'un éclairage intégrant une technologie de type REACTIVE LIGHTING commercialisée par la société PETZL.

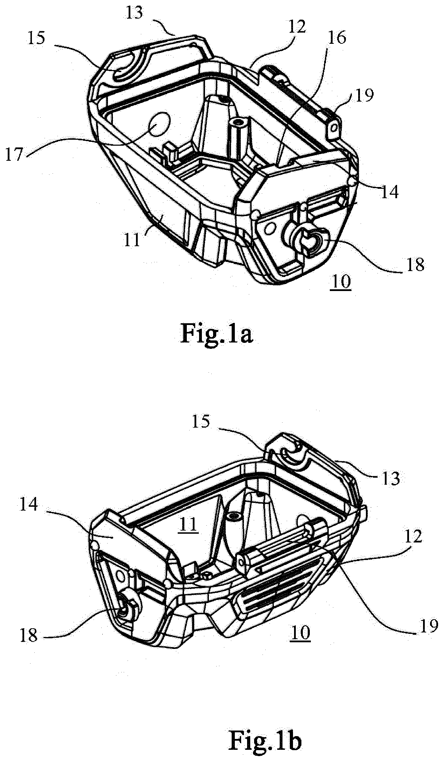

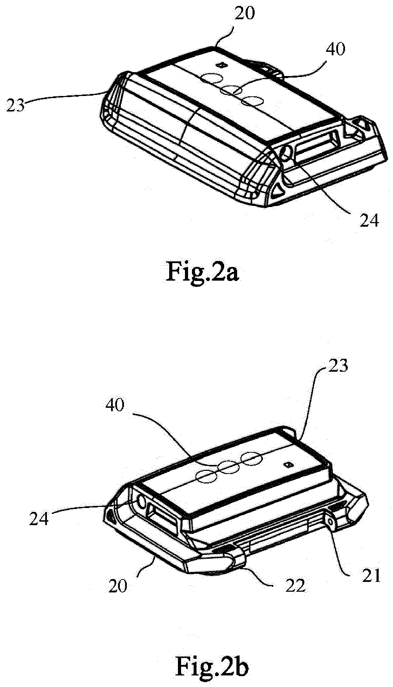

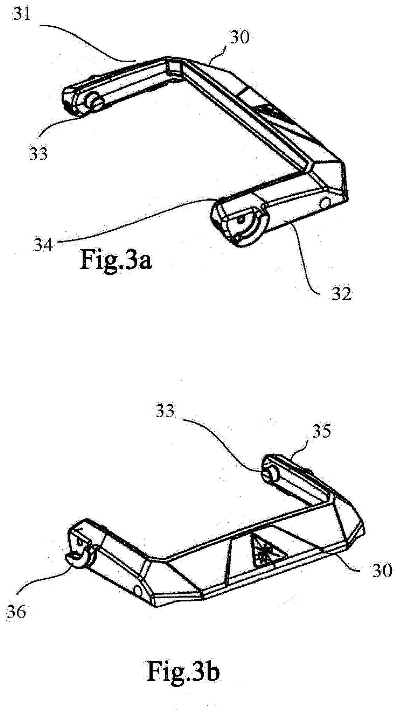

De manière générale le boitier de batterie conforme à la présente invention comporte trois éléments constitutifs qui sont respectivement illustrés dans les figures 1a/1b, 2a/2b et 3a/3b, à savoir :
- un corps de boîtier 10 (figures 1a et 1b) ;
- un couvercle de boîtier 20 comportant un connecteur électrique amélioré 40 (figures 2a et 2b) ;
- un levier de verrouillage 30 (figures 3a et 3b) spécifiquement conçu pour permettre le verrouillage du couvercle 20.

Le boîtier selon l'invention comporte un corps de boîtier 10 de forme sensiblement parallélipédique - illustré dans les deux perspectives avant et arrière des figures 1a et 1b respectivement, et destiné à recevoir un logement pour une batterie.

A cet égard, le corps de boîtier 10 comporte une face avant 11, une face arrière 12 et deux faces latérales gauche 13 et droite 14 venant délimiter au moyen d'un fond associé un logement pour une batterie d'alimentation électrique. La face arrière 12 comporte, au niveau de son arête arrière supérieure, un système de liaison 19 avec un couvercle 20, de type charnière, permettant la rotation du couvercle 20 par rapport à un premier axe de rotation sensiblement parallèle à l'arrête arrière supérieure de la face 12 du boîtier.

Dans un mode de réalisation particulier, l'assemblage de la charnière est réalisé au niveau du boîtier au moyen de deux trous borgnes matérialisant le premier axe de rotation et configurés pour recevoir deux tiges/broches du couvercle 20 qui sera décrit plus loin en relation avec les figures 2a et 2b.

L'axe de la charnière 19 mais également les faces latérale gauche 13 et droite 14 se projettent en saillie par rapport aux arêtes supérieures des faces avant 11 et arrière 12, comme cela apparaît dans les figures 1a et 1b.

Chacune des faces latérales gauche 13 et droite 14 comporte, au niveau de la partie avant du boîtier, une rainure (resp. 15, 16) de forme sensiblement circulaire, centrée sur un point définissant un second axe de rotation, dont on décrira plus loin la fonctionnalité.

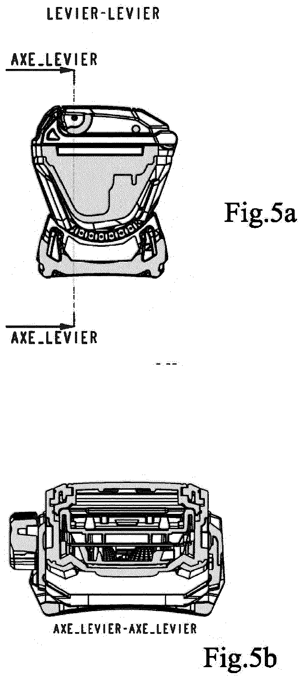

Enfin, le boîtier comporte au niveau du milieu des faces latérales gauche 13 et droite 14 deux éléments pivot 17 et 18 réalisant un troisième axe de rotation 17-18, autour duquel le boîtier peut décrire un mouvement en rotation par rapport à un support fixe 100 non illustré dans les figures 1a et 1b, mais représenté dans les figures 5, 6, 7 et 8a.

On décrit à présent, en référence aux figures 2a et 2b, le couvercle 20 qui est configuré de manière à fermer, de manière étanche, le boîtier de la figure 1a et 1b. D'une manière générale, le couvercle 20 comporte une face supérieure doté d'un connecteur tripolaire 40 qui sera décrit plus loin, deux faces avant et arrière ainsi que deux faces latérales gauche et droite.

Dans un mode de réalisation particulier, le couvercle 20 comporte, au niveau de sa face arrière, deux trous borgnes 21 et 22 destinés à recevoir une tige de rotation (non décrite) pour la réalisation d'une liaison pivot entre le couvercle 20 et le boîtier 10 matérialisant ainsi la liaison 19 de type charnière évoquée précédemment.

A l'opposé des trous 21 et 22, Le couvercle 20 comporte également sur les faces latérales gauche et droite, proche de la face avant, deux trous circulaires, respectivement 23 et 24, matérialisant le second axe de rotation mentionné précédemment, et configurés pour recevoir deux broches 33 et 34 situés sur les deux extrémités d'un levier 30 en forme de U de manière à permettre à en permettre la rotation autour du second axe de rotation situé à l'avant du couvercle 20. Le levier 30, illustré dans les figures 3a et 3b, est configuré de manière à venir épouser parfaitement la forme et le profil du couvercle 20 lorsque ce dernier est dans un plan horizontal, finalisant le verrouillage.

Le levier 30 en forme de U est illustré plus spécifiquement dans les figures 3a et 3b et comporte respectivement deux branches 31 (gauche) et 32 (droite). La face intérieure de la branche 31 comporte à son extrémité une première broche 33 perpendiculaire tandis que la branche 32 comporte sur sa face intérieure une seconde broche 34 également à son extrémité. Les deux broches 33 et 34 sont destinées à venir s'insérer dans les trous borgnes 23 et 24, respectivement du couvercle 20 de façon à réaliser la liaison pivot du levier 30 par rapport au couvercle 20 suivant le second axe de rotation.

Le levier 30 en forme de U comporte par ailleurs, sur chacune des deux faces externes des branche 31 et 32, une came circulaire ou semi-circulaire, 35 et 36 respectivement, présentant une forme sensiblement circulaire autour d'un axe commun avec le second axe de rotation.

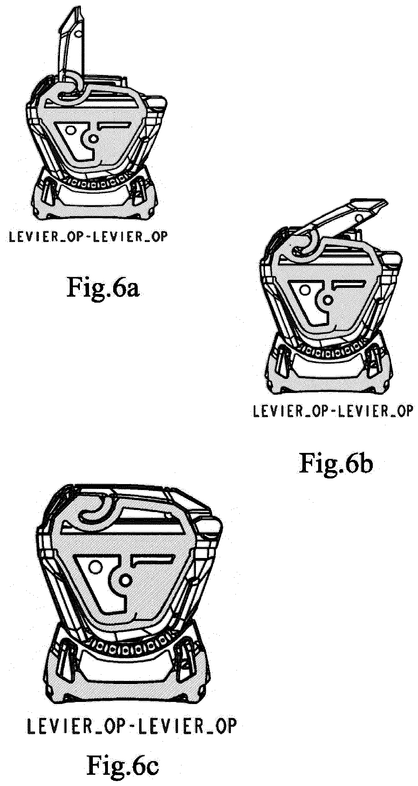

En correspondance, les faces latérales 13 et 14 du boîtier 10 comportent, au niveau de la partie avant, deux rainures circulaires 15 et 16 configurées pour venir recevoir le passage des cames semi-circulaires 35 et 36, respectivement, lorsque le couvercle est en position fermée avec le levier dans un plan vertical comme cela est illustré en figure 6a, et que l'on vient rabaisser le levier vers la droite pour l'amener dans un plan horizontal (figure 6b et figure 6c), ce qui provoque l'insertion des cames semi-circulaires 35/36 dans leurs rainures circulaires respectives 15 et 16 et assure un verrouillage par force grâce à la coopération entre les cames semicirculaires 35/36 et les rainures circulaires 15/16.

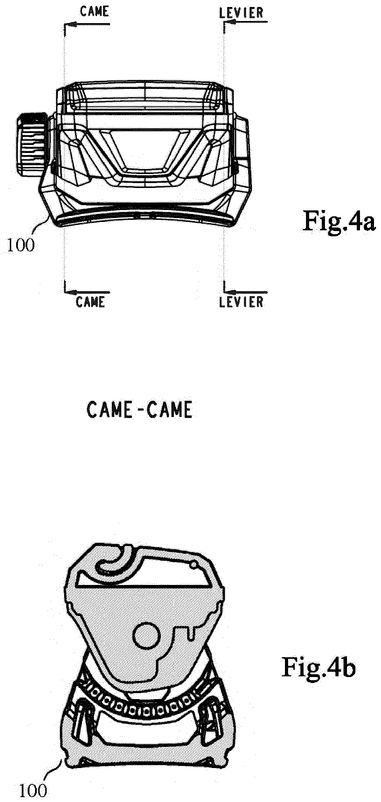

La figure 4a est une vue montrant une lampe frontale comportant un boîtier, son couvercle et le levier de verrouilles monté sur un support 100. Deux vues en coupe, respectivement CAME-CAME et LEVIER -LEVIER y sont définies.

La figure 4b est une coupe de la lampe frontale suivant l'axe CAME-CAME de la figure 4a. On y voit très nettement l'assemblage de la came 35 à l'intérieur de la rainure circulaire 15 de la face latérale 13.

La figure 5a est une coupe suivant l'axe LEVIER-LEVIER de la figure 4a, mettant également en évidence une coupe AXE_LEVIER-AXE_LEVIER dont le détail est illustré en figure 5a.

Les figures 6a, 6b et 6c montrent trois coupes illustratives du verrouillage du capot au moyen du levier de verrouillage, ce levier de verrouillage étant situé dans trois positions différentes: ouvert, semi ouvert, et fermé (verrouillé).

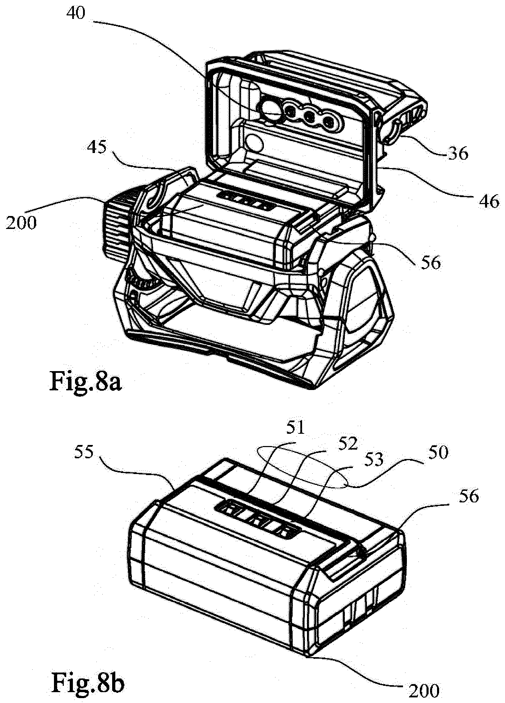

En partant de la figure 6a, l'utilisateur peut exercer une pression sur le couvercle tout en commençant à faire pivoter le levier autour du second axe de rotation de manière à faire pénétrer les cames circulaires 35/36 dans leurs rainures circulaires correspondantes 15/16. En venant abaisser le levier jusqu'au bout de la course - figure 6b mais également comme cela est illustré dans les figures 8f et 8g - l'utilisateur peut venir fermer le boîtier de manière sécurisée et parfaitement étanche grâce à la combinaison des joints internes au couvercle 20 (non représentés), et de la pression exercée par la coopération des cames circulaires 35/36 dans leurs rainures circulaires correspondantes 15/16.

On voit ainsi que l'abaissement du levier permet de réaliser l'assemblage décrit précédemment entre les cames 35/36 et les rainures circulaires 15/16, de façon à assurer une fermeture étanche et efficace du couvercle. On notera en particulier que l'étanchéité parfaite pourra être réalisée au moyen d'un ou plusieurs joints disposés sur le couvercle, dont le détail ne fait pas partie de la présente invention.

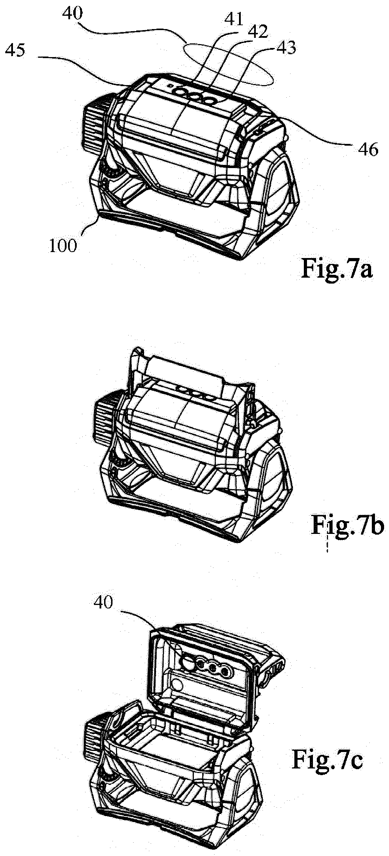

Les figures 7a-7c illustrent trois vues en perspective montrant des étapes de déverrouillage et d'ouverture du couvercle. Dans la figure 7a, le boîtier 10 est fermé avec son couvercle complètement verrouillé par le levier en U 30 disposé dans un plan horizontal. Dans la figure 7b, l'utilisateur a fait pivoter le levier en U 30 pour l'amener dans un plan vertical, libérant ainsi les cames circulaires 35/36 de leur rainure correspondantes 15/16 de manière à permettre la rotation du couvercle 20 autour du premier axe de rotation et, par suite, l'ouverture du boîtier. Dans la figure 7c, le boîtier est complètement ouvert avec son couvercle dans un plan parallèle, ce qui permet à l'utilisateur de dégager la batterie électrique présente dans le boîtier ou d'en insérer une nouvelle.

On décrit à présent plus en détail connecteur électrique tripolaire 40 disposé sur la face supérieure du couvercle 20, mais également sur celle de la batterie 200, et qui permet de réaliser la recharge de cette dernière, qu'elle soit ou non logée dans le boîtier 20.

Le dispositif de connexion électrique selon l'invention est basé sur un connecteur spécifique 60 décrit plus loin et surtout sur la combinaison de deux dispositions particulières présentés aussi bien sur la face supérieure du couvercle 20 du boîtier 10 que sur la face supérieure de la batterie 200, à savoir :
a) un ensemble de deux profils d'accrochage parfaitement symétriques 45 et 46 sur le boîtier 10 (resp. 55 et 56 sur la batterie 200) respectivement disposés dans la partie supérieure des faces latérales gauche et droite et permettant un clipsage/déclipsage aisé d'une mâchoire d'un connecteur 60 spécifiquement profilé; et
b) un connecteur tripolaire 40 sur la face supérieure du boîtier (resp. 50 sur la face supérieure de la batterie 200) comportant une première borne d'électrode 41 (resp. 51), une seconde borne d'électrode 42 (resp. 52) et une troisième borne d'électrode 43 (resp. 53) disposées linéairement, dans lequel la borne 42 (resp. 52) est une borne centrale disposée à égale distance des deux profils d'accrochage 45 et 46 (resp. 55 et 56).

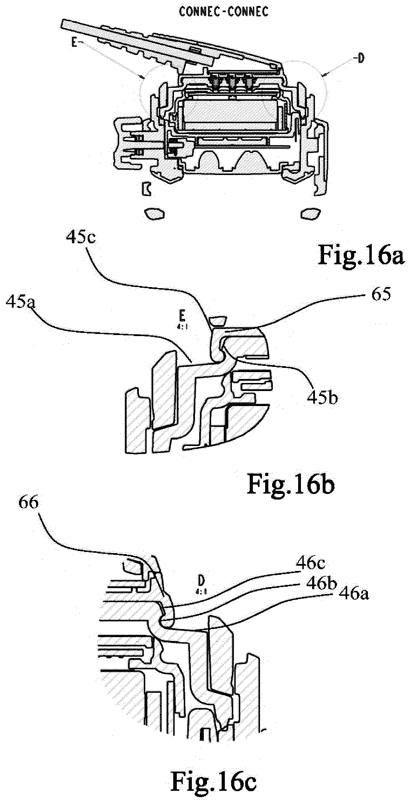

Pour permettre la recharge de la batterie même lorsque celle-ci est à l'intérieur du boîtier, comme cela apparaît sur la figure 8b mais également sur les vues en détail des figures 16b et 16c, chacune des faces latérales gauche et droite du couvercle 20 comporte un évidement permettant le positionnement d'un connecteur de recharge 60 présentant un profil approprié.

Plus spécifiquement, comme cela apparaît dans le détail de la figure 16b montrant le dispositif d'accrochage 45 de l'arête supérieure gauche, le profil de l'évidement comprend deux surfaces sensiblement planes 45a et 45c formant sensiblement un angle rentrant, et qui sont raccordées au moyen d'une rainure semi-circulaire 45b parallèle à l'arête supérieure de la face latérale gauche. Comme on le voit dans le détail de la coupe de la figure 16b montrant un connecteur 60 clipsé sur le couvercle, la rainure semi-circulaire 45b est configurée pour fournir une ligne d'appui à une surface cylindrique située à l'extrémité de la mâchoire flexible 65 du connecteur afin de permettre un clipsage/déclipsage de ce dernier sur le profil d'accrochage. Le déclipsage du connecteur est assuré par une élasticité des deux mâchoires permettant à la surface cylindrique de sortir de la rainure semi-circulaire correspondante pour écarter le connecteur.

De manière symétrique, comme on le voit dans la figure 16c, le dispositif d'accrochage 46 de l'arête supérieure droite montre un évidement comprenant deux surfaces sensiblement planes 46a et 46c raccordés par une rainure semi-circulaire 46b parallèle à la rainure 45b. De manière similaire à précédemment, le dispositif d'accrochage 46 est configuré pour fournir une ligne d'appui à une surface cylindrique située à l'extrémité de la mâchoire 66 du connecteur 60 tout en assurant également le blocage de cette mâchoire une fois en place.

De préférence, la batterie 200 comporte exactement un même profil et une même configuration sur sa face supérieure, à savoir un connecteur tripolaire 50 doté de trois bornes d'électrodes 51, 52 et 53 ainsi que des dispositifs d'accroche 55 et 56 identiques à ceux qui viennent d'être décrits pour le boîtier, en sorte que le même connecteur 60 pourra venir s'accrocher aussi bien sur le boîtier 10 que sur la batterie 200..

De cette manière, l'utilisateur peut recharger la batterie indifféremment de manière interne (ie logée dans le boîtier) ou externe. Avec l'avantage qu'une recharge d'une batterie est possible en même temps qu'une autre batterie est en cours d'utilisation dans la lampe frontale.

L'on va décrire à présent deux modes de réalisation alternatifs de l'interface électrique entre le connecteur électrique 60 et le boîtier 10 ou la batterie 200

Dans un premier mode de réalisation préféré, le boîtier 10 (resp. batterie 200) comporte une première borne centrale 41 (resp. 51), une seconde borne 42 (resp. 52) et une troisième borne 43 (resp. 53) disposées linéairement et à égale distance et configurées pour permettre une connexion électrique avec chacun des trois contacts du connecteur.

Les première et troisième bornes électriques 41 et 43 (resp. 51 et 53) sont dédiés à la transmission d'un potentiel électrique positif tandis que la seconde borne électrique 42 (resp. 52) est située à égale distance des profils d'accrochage gauche et droite de manière à permettre une connexion du connecteur par la droite ou par la gauche.

Dans ce premier mode de réalisation, la gestion de la température de la batterie est réalisée en interne, à l'intérieur du boîtier 10 (resp. batterie 200).

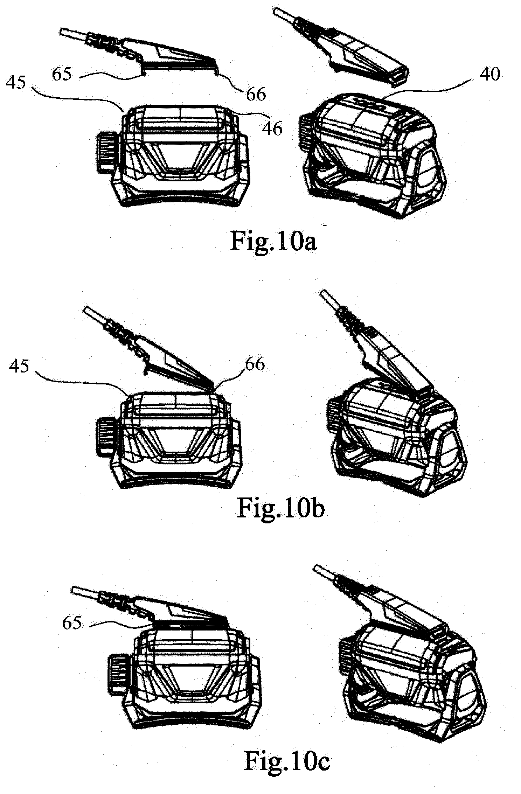

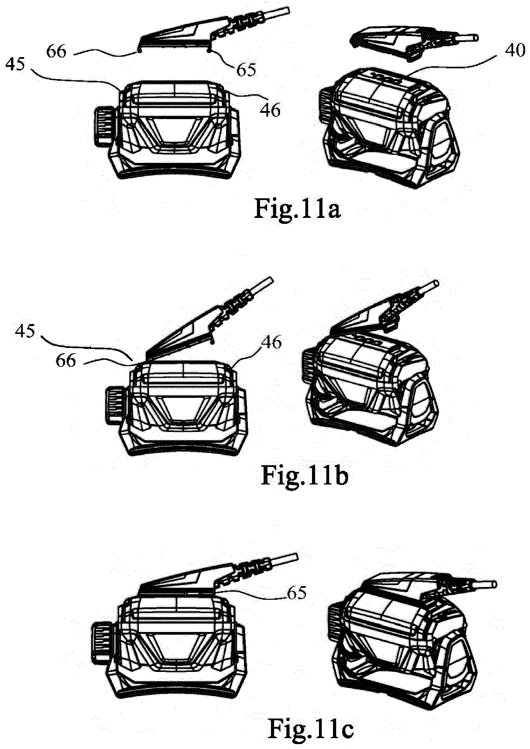

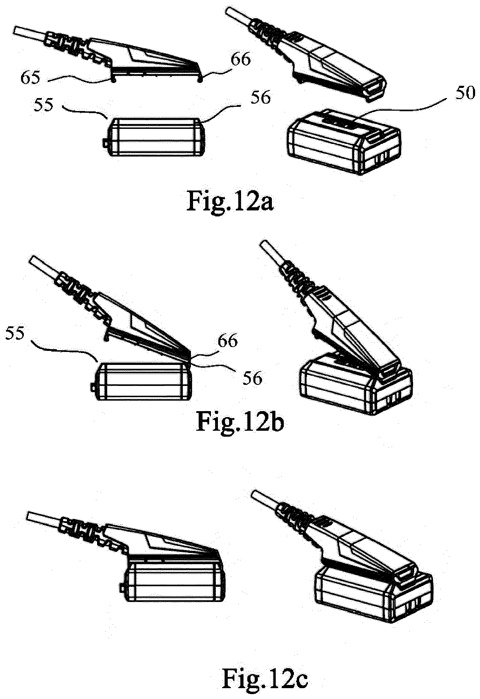

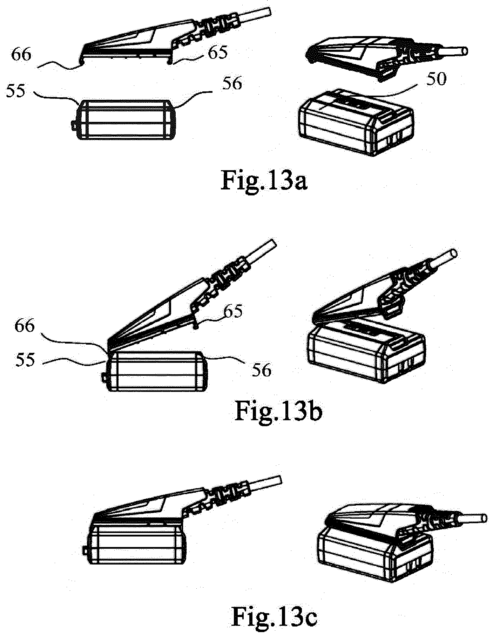

Dans un second mode de réalisation particulier, le dispositif de connexion 40 du boîtier 10 (resp. batterie 200) comporte une électrode centrale 42 (resp. 52) qui est dédiée à la transmission d'un signal électrique représentatif de la température de la batterie. Cette disposition s'avère très avantageuse dans la mesure où elle permet de délocaliser à l'extérieur du boîtier le circuit électronique de gestion de la batterie et d'éviter ainsi de devoir évacuer une chaleur intense générée à l'intérieur d'un boîtier étanche, ce qui pourrait ralentir le processus de recharge. En outre, la borne 42 (resp. 52) étant positionnée exactement à mi-chemin des deux profils d'accrochage 45-46 (resp. 55-56), la transmission du signal représentatif de la température de la batterie sera assurée quelque soit le sens de connexion du connecteur 60, par la gauche (figures 10a-c et 12a-c) ou par la droite (figures 11a-c et 13a-c).

Dans un mode de réalisation particulier, les deux autres bornes 41 et 43 du boîtier 10 (resp. 51 et 53 de la batterie 200) sont dédiées au couplage de deux potentiels, positif et négatif, de sorte que le connecteur 60, une fois clipsé sur le boîtier/batterie peut fournir deux tensions d'alimentation respectivement positive et négative pour la recharge de la batterie, tout en collectant le signal électrique sur la borne 42 (resp. 52) représentative de la température interne de la batterie.

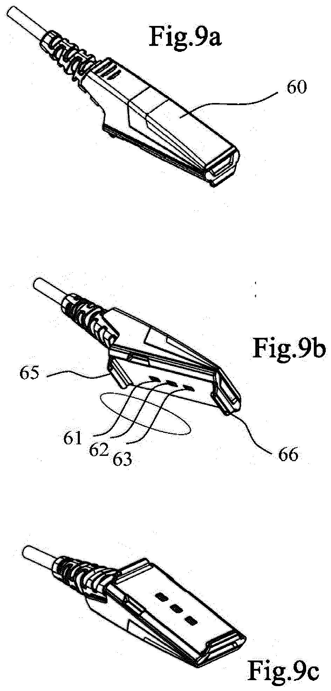

En référence aux figures 9a, 9b et 9c, on décrit à présent un connecteur 60 configuré pour venir se clipser/déclipser sur le boîtier 10 ou directement sur la batterie 200 grâce à deux mâchoires supérieure 66 et inférieure 65 spécialement configurées pour venir se clipser sur les dispositifs d'accroche 45/46 du boîtier 10 (resp. 55/56 de la batterie 200).

Le connecteur 60 comporte un jeu de trois électrodes de contact 61- 62- 63 disposés linéairement et en parfaite concordance avec les pôles d'électrodes 41-42-43 du boîtier 10 (resp. 51-52-53 de la batterie 200). De cette manière, le connecteur 60 peut fournir une tension d'alimentation via les contacts 61 et 63, tout en récupérant sur le contact 62 un potentiel représentatif de la température de la batterie.

Par ailleurs, par assurer un parfait clipsage, les mâchoires supérieure 66 et inférieure 65 comportent une surface cylindrique configurée pour venir prendre une ligne d'appui sur les congés correspondants 45b/46b du boîtier 10 (resp. 55b/56b de la batterie 200).

Dans un mode de réalisation particulier, le connecteur 60 est configuré pour être raccordé à un système de recharge de batterie qui comprend un système de détection automatique de la différence de potentiel présente entre les bornes 61 et 63 lorsqu'il est clipsé sur la batterie, et comporte par ailleurs des circuits électroniques de commutation pour fournir une différence de potentiel en harmonie avec le sens de la différence de potentiel détectée sur les bornes 41-43 du boîtier 10 (resp. 51-53 de la batterie 200). Cela permet une utilisation simplifiée au maximum pour un utilisateur qui n'a alors plus à se préoccuper du sens de clipsage du connecteur 60 -- par la gauche ou la droite - sur la face supérieure du boîtier 10 ou de la batterie 200.

Ainsi, comme on le voit dans la vue de face et la vue en perspective avant des figures 10a, 10b et 10c, l'utilisateur peut venir clipser le connecteur 60 sur le boîtier 10 dans un premier sens dans lequel le câble électrique du connecteur est sur sa gauche.

Au contraire, comme cela est illustré dans les figures 11a, 11b et 11c, l'utilisateur peut venir également clipser le connecteur 60 dans l'autre sens, c'est-à-dire lorsque le câble électrique du connecteur est sur sa droite.

De manière similaire, les figures 12a, 12b et 12c illustrent la connexion du connecteur 60 directement sur la batterie 200 depuis « la gauche ».

Et les figures 13a, 13b et 13c illustrent cette connexion dans le sens inverse, c'est-à-dire depuis « la droite »

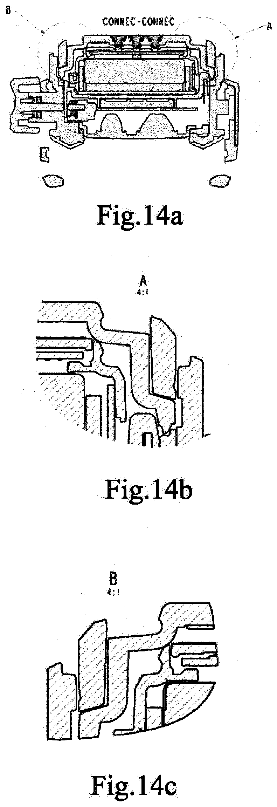

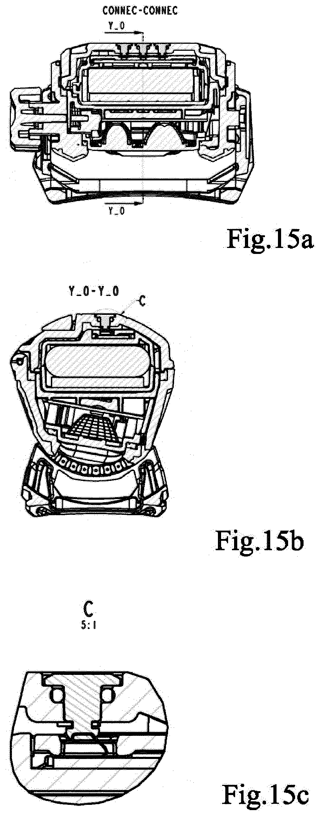

Les Figures 14a, 14b et 14c illustrent une coupe du boîtier avec la batterie, ainsi que deux vues en détails A et B , respectivement, tandis que la figure 15a illustre la vue CONNEC-CONNEC du boîtier comportant la batterie, ainsi que la définition d'une coupe Y_0.

Par ailleurs, la figure 15b illustre la coupe Y_0-Y_0 définie dans la figure 15a et la figure 15c illustre un détail C de la figure 15b.

Les figures 16a, 16b et 16c illustrent respectivement une coupe du connecteur de raccordement raccordé sur le boîtier comportant la batterie, ainsi que deux détails D et E respectivement.

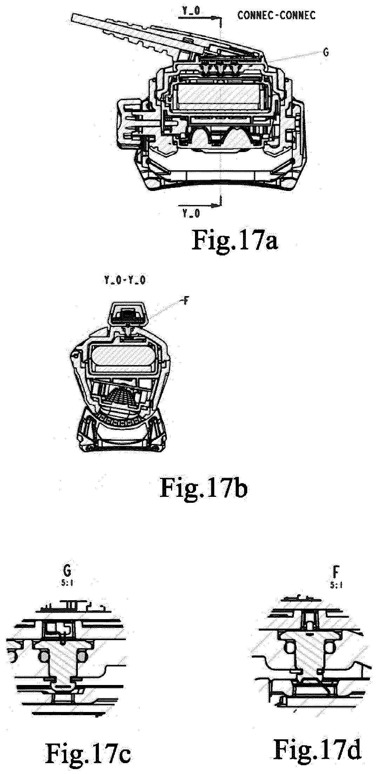

Les figures 17a, 17b, 17c et 17d illustrent respectivement les mêmes coupes que celles des figures 15, mais avec le connecteur raccordé sur le boîtier de logement de la batterie, avec deux vues en détail D et E.

Comme on le voit, le dispositif qui vient d'être décrit, présent une très grande facilité d'utilisation pour l'utilisateur qui n'a pas à se préoccuper du sens de clipsage du connecteur sur la batterie et qui indifféremment choisir de charger directement la batterie à l'extérieur du boîtier ou lorsqu'elle est logée dans le boîtier de la lampe frontale.

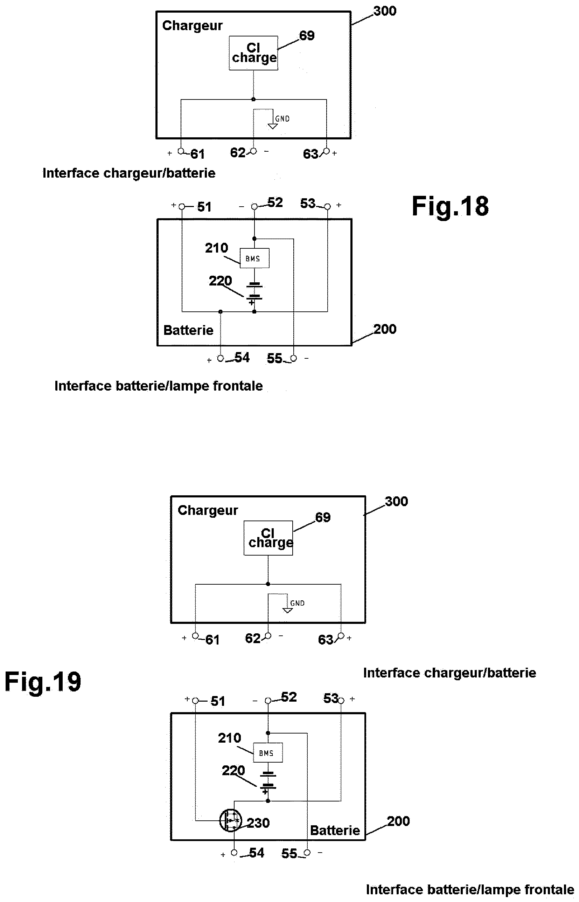

On décrit à présent en relation avec les figures 18, 19 et 20 trois modes de réalisation spécifiques des circuits électroniques du système de recharge et de la batterie.

La figure 18 illustre une première réalisation de l'électronique associée à un chargeur 300 configuré pour venir recharger une batterie 200, telle que décrite précédemment au travers une interface chargeur batterie réalisant la partie électrique du connecteur 60 comportant les trois électrodes 61, 62 et 63.

Dans ce premier mode de réalisation, le chargeur 300 comporte un circuit intégré de recharge 69 venant alimenter les trois pôles 61, 62 et 63 du connecteur 60 (non illustré dans la figure 18) recevant respectivement trois tensions positive, négative (masse) et positive.

En correspondance avec les pôles 61-62-63, la batterie 200 comporte trois pôles 51, 52 et 53 assurant le couplage électrique entre les pôles du connecteur 60 et ceux de la batterie, ainsi que deux pôles supplémentaires 54 et 55 réalisant l'interface entre la batterie et la lampe frontale.

Les connexions électriques sont réalisées. Les pôles 51, 53 et 54 sont couplés ensemble et véhiculent le potentiel positif. Le pôle 52 est couplé au pôle 55 ainsi qu'à une première électrode d'un circuit de gestion de la batterie BMS 210 dont une seconde électrode est connectée à une première électrode d'une cellule d'énergie 220. La cellule 220 a sa seconde électrode connectée aux pôles 51,54 et 55. Le circuit BMS 210 est localisé au plus près de la cellule d'énergie 220 pour en assurer une protection adéquate.

Comme on le voit, le circuit de la figure 18 réalise un connecteur symétrique dont la fonction de réversibilité est assurée par les pôles positifs 51 et 53 qui sont symétriquement et positionnés de part et d'autre du contact central - réalisé par le pôle 52.

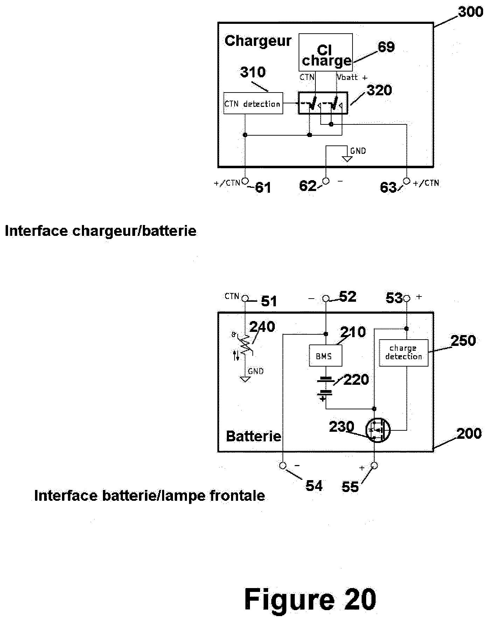

Dans des modes de réalisation plus perfectionnés qui seront décrits en relation avec les figures 19 et 20, on se propose de venir ajouter des fonctionnalités complémentaires et ce, de manière très avantageuse, sans ajout de pôles supplémentaires.

Les éléments des figures 19 et 20 qui sont communs avec ceux de la figure 18 conserveront des références identiques.

La figure 19 montre un second mode de réalisation présentant un chargeur identique à celui de la figure 18. En revanche, la batterie 200, si elle comporte toujours un jeu de trois pôles 51-52-53 et deux pôles 54-55 , respectivement aux niveaux de l'interface avec le chargeur et avec la lampe frontale, intègre à présent un transistor MOS 230 ayant une grille, une source et un drain respectivement couplé aux pôles 51, 53 et 54. Comme précédemment, le circuit 210 et la cellule d'énergie 220 sont connectés en série entre les pôles et 53.

Grâce à cette disposition, le chargeur garde une construction symétrique, les bornes positives sont identiques mais les fonctionnalités des deux contacts en vis-à-vis côté batterie sont utilisées de manière différente. La réversibilité est assurée en faisant en sorte que la fonction est assurée dans la plage de tension fournie sur une borne + du chargeur. La fonction recherchée dans ce second mode de réalisation est la déconnexion du contact L- (vers la lampe frontale) par le mosfet lorsque le chargeur est branché. Comme on le voit, on ne peut donc pas utiliser la lampe lors de la charge. L'avantage présenté par ce second mode de réalisation est l'utilisation de 3 pôles (+, -, +) côté chargeur pour 3 contacts différents côté batterie sans augmenter le nombre de contacts.

La figure 20 illustre un troisième mode de réalisation dans lequel on vient introduire de nouveaux composants tant dans le chargeur 300 que dans la batterie 200.

En effet, le chargeur 300 comporte à présent, outre le circuit intégré de charge 69, un circuit de détection d'un capteur de température CTN 310 et un circuit de commutation 320. Le circuit de détection CTN 310 comporte deux électrodes, à savoir une première électrode raccordée au pôle 61 pour détecter la présence d'un signal représentatif d'une température CTN, ainsi qu'une seconde électrode permettant la transmission d'un signal de commande sur le circuit de commutation 320. Le circuit de charge 69 est couplé via deux électrodes au circuit de commutation 320, lequel est couplé également aux deux pôles 61 et 63... En fonction du signal de commande transmis par le circuit CTN 310, le circuit de commutation 320 peut venir intervertir les pôles 61 et 63 de manière à assurer la réversibilité du couplage du connecteur 60. Le pôle 62 est, quant à lui, couplé à la masse.

La batterie 200 comporte , en série entre les pôles 52 et 55, un circuit de gestion de la batterie 210, une cellule d'énergie 220 et un transistor MOSFET 230. Le pôle 54 est par ailleurs raccordé au pole 52 véhiculant la masse.

Un circuit de détection de charge 250, raccordé au pôle 53 et couplé à la grille du MOSFET 230, vient détecter la présence du connecteur de charge pour, le cas échéant, venir autoriser ou non le passage de courant provenant de la cellule d'énergie 220 et, ainsi valider l'utilisation de la batterie.

Enfin, la batterie 200 comporte une résistance CTN 240 couplée entre la masse et le pôle 51 de manière à transmettre, via celui-ci, une information représentative de la température de la cellule d'énergie. C'est cette information que, précisément, le circuit 310 du coupleur vient détecter pour le transmettre au circuit de charge.

Ce troisième mode de réalisation présente des avantages significatifs.

En effet, afin d'optimiser la charge et la sécurité de la batterie en fonction de la température (en plus des protections du BMS) il est important de faire remonter l'information de la température au chargeur. Or, comme cela a été évoqué ci-dessus, il est souhaitable de ne pas venir ajouter une paire de contacts supplémentaires au connecteur 60. Par conséquent, le troisième mode de réalisation réalise ce but en utilisant seulement que 3 contacts différents CTN, - , + respectivement sur les pôles 51, 52 et 53. La réversibilité est assurée au moyen d'une affectation des fonctionnalités : ici fonction + et fonction CTN par la détection des contacts présent en face d'une des pins/pôles du chargeur.

Lors d'une connexion du chargeur sur la batterie le circuit de détection CTN 310 va détecter ou non la présence de la CTN de la batterie. En fonction de ce circuit « voît », il va commander le bloc commutateur 320 (commutateur analogique) pour affecter les fonctions CTN et VBATT+ du circuit 69 vers les bons pôles/contacts du connecteur réversible 60.

Par ailleurs, la fonction qui était déjà présente dans le second mode de réalisation est également présent dans ce troisième mode de réalisation : à savoir la déconnexion de la batterie côté lampe en cas de recharge. Cette fonction est réalisée dans le troisième mode de réalisation au moyen de la présence de la tension du chargeur sur la borne + seule. Le bloc 250 commande le mosfet 230 permettant de couper le signal sur le pole 55 (L+) et évite des effets de bords (rebouclage de la tension de cellule sur l'entrée du mosfet).

## Revendications

1. Un dispositif de connexion d'un système de recharge d'une batterie comportant :
un connecteur (60) doté de trois contacts électriques disposés linéairement et comportant en outre deux mâchoires flexibles ayant à leur extrémité une surface cylindrique destinée à venir se clipser sur la partie supérieure d'une batterie (200); dans lequel ledit connecteur comporte un premier (61), un second (62) et un troisième (63) contact électriques linéairement disposés et le second contact (62) étant disposé à égale distance des deux mâchoires ; et
une batterie (200) comportant deux faces latérales gauche et droite comprenant chacune un évidement avec un profil d'accrochage (55, 56) configuré pour une mâchoire correspondante dudit connecteur (60), ladite batterie (200) comportant une première borne d'électrode (51), une seconde borne d'électrode (52) et une troisième borne d'électrode (53) disposées linéairement et configurées pour permettre une connexion électrique avec chacun des trois contacts (61, 62, 63) dudit connecteur (60) , et
dans lequel le profil de chacun desdits évidements comprend deux surfaces sensiblement planes (55a- 55c, 56a-56c) formant sensiblement un angle rentrant, et qui sont raccordées au moyen d'une rainure semi-circulaire (55b) dont l'axe générateur est parallèle à l'arrête supérieure de la face latérale gauche , dans lequel ladite rainure semi-circulaire (55b) fournit une ligne d'appui à ladite surface cylindrique d'une mâchoire correspondante, de manière à permettre un clipsage du connecteur.
dans lequel les première et troisième bornes électriques (51, 53) sont dédiées à la transmission d'un premier potentiel électrique et dans lequel la seconde borne (52) est située à égale distance des profils d'accrochage gauche et droite de manière à permettre une connexion du connecteur par la droite ou par la gauche et est par ailleurs dédiée à la transmission d'un second potentiel électrique.

2. Un dispositif de connexion selon la revendication 1 dans lequel la seconde borne (52) est configurée pour transmettre un potentiel négatif tandis que les première et troisième borne (51, 53) sont configurées pour transmettre un potentiel positif.

3. Un dispositif de connexion selon la revendication 1 ou 2 dans lequel, la première ou la seconde borne est configurée pour transmettre au chargeur un potentiel représentatif de la température de la batterie ; et
dans lequel les deux autres bornes sont alors configurées pour transmettre deux potentiels positif et négatif.

4. Un dispositif de connexion d'un système de recharge d'une batterie logé dans un boîtier (10) d'une lampe frontale comportant :
un connecteur (60) doté de trois contact électriques disposés linéairement et comportant en outre deux mâchoires flexibles ayant à leur extrémité une surface cylindrique destinée à venir se clipser sur un boîtier de logement (10) d'une batterie (200) ; dans lequel ledit connecteur comporte un premier (61), un second (62) et un troisième (63) contact électriques linéairement disposés et le second contact (62) étant disposé à égale distance des deux mâchoires ; et
un boîtier de logement (10) pour une batterie (200) comportant deux faces latérales gauche et droite comprenant chacune un évidement avec un profil d'accrochage (45, 46) configuré pour une mâchoire correspondante dudit connecteur (60), ledit boîtier de logement (10) comportant une première borne d'électrode (41), une seconde borne d'électrode (42) et une troisième borne d'électrode (43) disposées linéairement et configurées pour permettre une connexion électrique avec chacun des trois contacts (61, 62, 63) dudit connecteur (60) , ; et
dans lequel le profil de chacun desdits évidements comprend deux surfaces sensiblement planes (45a- 45c, 46a-46c) formant sensiblement un angle rentrant, et qui sont raccordées au moyen d'une rainure semi-circulaire 45b dont l'axe générateur est parallèle à l'arrête supérieure de la face latérale gauche , dans lequel ladite rainure semi-circulaire (45b) fournit une ligne d'appui à ladite surface cylindriques d'une mâchoire correspondante, de manière à permettre un clipsage du connecteur;
dans lequel les première et troisième bornes électriques (41, 43) sont dédiées à la transmission d'un premier potentiel électrique et dans lequel la seconde borne (42) est située à égale distance des profils d'accrochage gauche et droite de manière à permettre une connexion du connecteur par la droite ou par la gauche et est par ailleurs dédiée à la transmission d'un second potentiel.

5. Le dispositif selon l'une quelconque des revendications 1 ou 2 dans lequel le connecteur (60) est configuré pour pouvoir être indifféremment connecté dans un sens ou dans l'autre relativement à la batterie (200) ou au boîtier (10).

6. Un dispositif de connexion selon la revendication 4 ou 5 dans lequel la seconde borne (42) est configurée pour transmettre un potentiel négatif tandis que les première et troisième borne (41, 43) sont configurées pour transmettre un potentiel positif.

7. Un dispositif de connexion selon la revendication 4 ou 5 dans lequel, dans lequel, la première ou la seconde borne (41, 42) est configurée pour transmettre au chargeur un potentiel représentatif de la température de la batterie ; et
dans lequel les deux autres bornes sont alors configurées pour transmettre deux potentiels positif et négatif.

8. Le dispositif selon la revendication 4, dans lequel le boîtier de logement de la batterie comporte :
un corps de boîtier (10) comportant une face avant (11), une face arrière (12) et deux faces latérales gauche et droite (13, 14),
dans lequel ladite face arrière (12) comportant une charnière (19) permettant la rotation d'un couvercle 20 par rapport à un premier axe de rotation sensiblement parallèle à l'arête arrière supérieure ;
dans lequel chacune des faces latérales gauche et droite (13, 14) comporte, au niveau de la partie avant dudit boîtier, une rainure de forme sensiblement circulaire (15, 16) centrée sur un point définissant un second axe de rotation ;
ledit couvercle de boîtier (20) comporte une face supérieure, deux faces latérales gauche et droite et une face latérale arrière,
dans lequel ladite face latérale arrière comportant une liaison pivot permettant la mise en rotation du couvercle autour dudit premier axe ;
dans lequel ledit couvercle (20) comporte respectivement sur les faces latérales gauche et droite un trou borgne (23, 24) matérialisant ledit second axe de rotation, et configurés pour recevoir deux broches (33, 34) situés sur les deux extrémités d'un levier (30) en forme de U de manière à permettre à en permettre la rotation autour du second axe de rotation
ledit levier de verrouillage (30) comportant deux branches gauche (31) et droite (32),
dans lequel la face intérieure de la branche gauche (31) comporte une première broche (33) perpendiculaire et la face intérieure de la branche droite (32) comporte une seconde broche (34) ;
dans lequel lesdites première et seconde broches (33, 34) sont configurées pour venir s'insérer dans lesdits trous borgnes (23, 24) dudit couvercle (20) de façon à compléter une liaison pivot dudit levier (30) par rapport audit couvercle (20) autour dudit second axe de rotation;
dans lequel ledit levier (30) en forme de U comporte par ailleurs, sur chacune des deux faces externes des branches gauche et droite (31, 32), une came (35, 36) présentant une forme sensiblement circulaire centrée autour dudit second axe de rotation ;
dans lequel lesdites faces latérales (13, 14) dudit boîtier (10) comportent, au niveau de la partie avant, deux rainures circulaires (15,16) centrées autour du second axe de rotation, et configurées pour venir recevoir le passage desdites cames circulaires (35, 36), respectivement, lorsque le couvercle est en position fermée avec le levier en position déployé et que l'on vient pivoter le levier pour venir insérer les cames circulaires (35,36) dans leurs rainures circulaires respectives (15, 16) assurant un verrouillage par force.

9. Le dispositif de recharge selon la revendication 8, dans lequel ledit boîtier comporte au niveau du milieu des faces latérales gauche et droite deux éléments pivot (17, 18) réalisant un troisième axe de rotation autour duquel le boîtier peut décrire un mouvement en rotation par rapport à un support fixe.

10. Le dispositif de recharge selon la revendication 9, dans lequel ledit levier (30) est configuré de manière à venir épouser parfaitement le forme et le profil dudit couvercle (20) lorsque ce dernier est dans la position de verrouillage finalisée.

11. Le dispositif de recharge selon la revendication 10, dans lequel boîtier réalise un logement batterie externe permettant l'alimentation électrique déportée d'une lampe frontale.

12. Un dispositif de recharge d'une batterie pour une lampe frontale dans lequel le système de recharge comporte un dispositif de connexion tel que défini dans la revendication 3 ou 7, et dans lequel le système de charge comporte en outre des circuits électroniques pour détecter automatiquement le sens de la différence de potentiel présentes sur les première et troisième bornes d'électrodes (41, 43) et des circuits de commutations pour adapter le sens de la tension à appliquer auxdits premier et troisième contact (61, 63).

13. Lampe frontale présentant un boîtier d'alimentation adapté pour une recharge par un dispositif de recharge tel que défini dans l'une quelconque des revendications précédentes.

14. Batterie électrique pour l'alimentation d'une lampe portative, configurée pour être rechargée par le dispositif de recharge tel que défini dans la revendication 1 à 11.
